# EUROPÄISCHE PATENTANMELDUNG

(11) **EP 4 557 023 A1**
(43) Veröffentlichungstag der Anmeldung: **21.05.2025**
(21) Anmeldenummer: 23210091.7
(22) Anmeldetag: 15.11.2023
(51) Int. Cl.: G05B 17/02

(54) **COMPUTERBASIERTE VORHERSAGE VON AUSGANGSGRÖSSEN EINES TECHNISCHEN SYSTEMS**

(71) Anmelder: Siemens Aktiengesellschaft, 80333 München (DE)
(72) Erfinder: Die Erfindernennung liegt noch nicht vor
(74) Vertreter: Siemens Patent Attorneys

(57) **Zusammenfassung**

Vorgeschlagen wird ein Verfahren zur computerbasierten Vorhersage von Ausgangsgrößen (3) eines mit Eingangsgrö-ßen (2) beaufschlagten technischen Systems (1), umfassend:
- Erzeugen eines Simulationsmodells (5) des technischen Systems (1) durch einen computerimplementierten Modellierungsdienst, wobei das Simulationsmodell (5) ein technisches Verhalten des technischen Systems (1) auf die Anregung durch die Eingangsgrößen (2) hin abbildet, wobei das Simulationsmodell (5) aus einem ersten Teil (6) und einen zweiten Teil (7) gebildet wird,
- Implementieren eines bereits bekannten Teils (8) des technischen Verhaltens des technischen Systems (1) in dem ersten Teil (6) durch den computerimplementierten Modellierungsdienst,
- Implementieren eines neuronalen Netzes (10) in dem zweiten Teil (7) des Simulationsmodells (5) durch den computerimplementierten Modellierungsdienst,
- Trainieren des neuronalen Netzes (10) durch den computerimplementierten Modellierungsdienst, derart, dass das ausgeführte Simulationsmodell (5) bei einem simulativen Beaufschlagen mit den Eingangsgrößen (2) simulative Ausgangsgrößen (3) ausgibt, deren Betrag im Wesentlichen einem Betrag der zuvor aufgenommenen Ausgangsgrößen (3) des realen technischen Systems (1) entsprechen,
- Computerimplementiertes Beaufschlagen des Simulationsmodells mit Eingangsgrößen (2), um die Ausgangsgrößen (3) des technischen Systems (1) vorherzusagen.

## Beschreibung

Die Erfindung betrifft ein Verfahren zur computerbasierten Vorhersage von Ausgangsgrößen eines mit Eingangsgrö-ßen beaufschlagten technischen Systems. Außerdem betrifft die Erfindung einen computerimplementierten Modellierungsdienst. Außerdem betrifft die Erfindung eine technische Anlage mit wenigstens einem technischen System und einem computerimplementierten Modellierungsdienst.

Es ist bekannt, zur Erstellung eines Simulationsmodells eines technischen Systems ein maschinelles Lernen einzusetzen. Dabei wird das komplette Simulationsmodell unter Verwendung von Eingangsgrößen in das technische System und ermittelten Ausgangsgrößen als einem Antwortverhalten des technischen Systems durch das maschinelle Lernen erzeugt (datengetriebene Modellierung). Die DE 10 2020 003428 A1 offenbart exemplarisch eine rein datengetriebene Erstellung eines Simulationsmodells.

Bei der ausschließlichen Verwendung eines maschinellen Lernens, also einer datengetriebenen Modellierung, kann das resultierende Simulationsmodell in der Regel keine physikalischen Zusammenhänge zwischen Eingangs- und Ausgangsgrößen korrekt abbilden. Zudem ist das resultierende Simulationsmodell für zu simulierende Eingangsgrö-ßen/Ausgangsgrößen, die sich außerhalb des Bereiches der zuvor ermittelten Eingangsgrößen/Ausgangsgrößen (also der Trainingsdaten für das maschinelle Lernen) liegen, oftmals nicht valide.

Der Erfindung liegt die Aufgabe zugrunde, ein Verfahren zur computerbasierten Vorhersage von Ausgangsgrößen eines mit Eingangsgrößen beaufschlagten technischen Systems anzugeben, welches die zuvor genannten Nachteile des Standes der Technik vermeidet und dabei eine höhere Effizienz als bekannte, vergleichbare Verfahren aufweist.

Diese Aufgabe wird gelöst durch Verfahren zur computerbasierten Vorhersage von Ausgangsgrößen eines mit Eingangsgrößen beaufschlagten technischen Systems nach Anspruch 1. Zudem wird die Aufgabe gelöst durch einen computerimplementierten Modellierungsdienst nach Anspruch 14 und durch eine technische Anlage nach Anspruch 15. Vorteilhafte Weiterbildungen der Erfindung sind Gegenstand der abhängigen Ansprüche.

Ein erfindungsgemäßes Verfahren zur computerbasierten Vorhersage von Ausgangsgrößen eines mit Eingangsgrößen beaufschlagten technischen Systems umfasst die folgenden Schritte:
- Beaufschlagen des realen technischen Systems mit den Eingangsgrößen und Aufnehmen der aus dem technischen Verhalten des technischen Systems resultierenden Ausgangsgrößen,
- Erzeugen eines Simulationsmodells des technischen Systems durch einen computerimplementierten Modellierungsdienst, wobei das Simulationsmodell ein technisches Verhalten des technischen Systems auf die Anregung durch die Eingangsgrößen hin abbildet, wobei das Simulationsmodell aus einem ersten Teil und einen zweiten Teil gebildet wird,
- Implementieren eines bereits bekannten Teils des technischen Verhaltens des technischen Systems in dem ersten Teil durch den computerimplementierten Modellierungsdienst,
- Implementieren eines neuronalen Netzes in dem zweiten Teil des Simulationsmodells durch den computerimplementierten Modellierungsdienst,
- Trainieren des neuronalen Netzes durch den computerimplementierten Modellierungsdienst, derart, dass das ausgeführte Simulationsmodell bei einem simulativen Beaufschlagen mit den Eingangsgrößen simulative Ausgangsgrö-ßen ausgibt, deren Betrag im Wesentlichen einem Betrag der zuvor aufgenommenen Ausgangsgrößen des realen technischen Systems entsprechen,
- Computerimplementiertes Beaufschlagen des Simulationsmodells mit Eingangsgrößen, um die Ausgangsgrößen des technischen Systems vorherzusagen.

Ein technisches System kann eine Prozessanlage wie beispielsweise eine chemische, pharmazeutische, petrochemische oder eine Anlage aus der Nahrungs- und Genussmittelindustrie sein. Ebenfalls kann das technische System eine Fertigungsanlage zur Herstellung eines Produktes wie einer Maschine oder eines Kraftfahrzeuges sein. Unter dem Begriff "technisches System" sind auch kleinere technische Objekte wie ein Zusammenschluss mehrerer Sensoren, Recheneinheiten und Aktoren sein. Das technische System kann eine Mehrzahl von technischen Objekten umfassen, mit deren Hilfe ein technischer Prozess durchgeführt werden kann. Beispielsweise kann ein technisches System einen Heizkessel, mit dem eine Flüssigkeit erwärmt werden kann, oder ein Förderband umfassen, mit dem ein Medium oder ein Gegenstand befördert werden kann.

Das technische System kann dazu ausgebildet sein, in einer technischen Anlage (Prozessanlage, Fertigungsanlage) eine komplexe technische Funktion auszuführen, wie z.B. das kontrollierte Pumpen von Flüssigkeit, das Erhitzen von Wasser und das Aufrechterhalten einer bestimmten Temperatur in einem Tank, das Ausführen einer Filterfunktionalität und dergleichen. Zu diesem Zweck kann das technische System beispielsweise Ventile, Tanks, Sensoren und dergleichen als technische Objekte aufweisen.

In einem ersten Schritt wird das reale technische System mit Eingangsgrößen beaufschlagt. Mit anderen Worten wird das technische System bestimmungsgemäß betrieben. Dies kann zum Beispiel bedeuten, dass eine Fluidmenge in einen Heizer des technischen Systems eingebracht wird. Zudem kann eine elektrische Spannung oder ein Drehmoment eines rotierenden Elementes Eingangsgrößen sein, mit denen das technische System beaufschlagt wird.

Das technische System reagiert auf die Beaufschlagung durch die Eingangsgrößen mit bestimmten Ausgangsgrößen, genauer: mit bestimmten Werten der Ausgangsgrößen. Diese Ausgangsgrößen bzw. deren Werte werden durch geeignete Aufzeichnungsmittel aufgenommen und in einem Datenspeicher hinterlegt. Als Resultat liegen die realen, physikalischen Antworten des kompletten technischen Systems auf eine Stimulation durch die Eingangsgrößen vor.

Daraufhin wird ein Simulationsmodell des technischen Systems durch einen computerimplementierten Modellierungsdienst erzeugt. Der Modellierungsdienst kann auf einem hierzu ausgebildeten Rechner, insbesondere einer Operator Station eines Leitsystems für eine technische Anlage, einem Tablet, einem Smartphone oder in einer cloudbasierten Umgebung implementiert sein.

Das Simulationsmodell dient einer Abbildung des technischen Verhaltens des technischen Systems auf die Anregung durch die Eingangsgrößen hin. Es wird wenigstens aus einem ersten und einem zweiten Teil gebildet, wobei das Simulationsmodell noch weitere Teile aufweisen kann.

In dem ersten Teil des Simulationsmodells wird ein bereits bekannter Teil des technischen Verhaltens des technischen Systems durch den computerimplementierten Modellierungsdienst implementiert. Es wird dabei von der Annahme ausgegangen, dass ein Teil des technischen Verhaltens des technischen Systems bereits bekannt ist.

In dem zweiten Teil des Simulationsmodells wird ein neuronales Netz durch den computerimplementierten Modellierungsdienst implementiert. Dieses neuronale Netz wird dann so trainiert, dass das ausgeführte Simulationsmodell bei einem simulativen Beaufschlagen mit den Eingangsgrößen simulative Ausgangsgrößen ausgibt, deren Betrag im Wesentlichen einem Betrag der zuvor aufgenommenen Ausgangsgrößen des realen technischen Systems entsprechen. Mit anderen Worten wird das neuronale Netz so trainiert, dass das Simulationsmodell auf die Beaufschlagung mit den Eingangsgrößen analog zu dem realen technischen System reagiert.

Ist das neuronale Netz trainiert, wird das Simulationsmodell mit den Eingangsgrößen beaufschlagt, um die Ausgangsgrößen des technischen Systems simulativ vorherzusagen.

Das erfindungsgemäße Verfahren weist gegenüber dem Stand der Technik den bedeutenden Vorteil auf, dass eine Aufteilung in einen bekannten Teil und einen unbekannten Teil des Verhaltens des technischen Systems vorgenommen wird. Das neuronale Netz, welches den unbekannten Teil modelliert, muss dabei nicht mit komplexen physikalischen Zusammenhängen des technischen Systems gespeist werden, sondern kann den unbekannten Teil rein datengetrieben modellieren. Dies vereinfacht eine Bedienung des computerimplementierten Modellierungsdienstes durch einen Operator.

Bevorzugt werden in dem ersten (bekannten) Teil des Simulationsmodells physikalische Randbedingungen des technischen Systems berücksichtigt. Die Vorgabe der physikalischen Randbedingungen schränkt die Variationsbreite beim Trainieren des neuronalen Netzes ein und beschleunigt dieses Verfahren.

Bevorzugt beruhen die physikalischen Randbedingungen auf einem physikalischen Erhaltungssatz, insbesondere einer Massenerhaltung oder einer Energieerhaltung.

Besonders bevorzugt stellen die physikalischen Randbedingungen einen zu erwartenden Zusammenhang zwischen einer der Eingangsgrößen und einer oder mehrerer der Ausgangsgrößen dar. So kann beispielsweise in dem bekannten, ersten Teil des Simulationsmodells vorgegeben werden, dass sich eine Ausgangsgröße X proportional zu einer Eingangsgröße Y oder zu einem Quadrat des Betrages der Eingangsgröße Y verhält. Hierdurch lässt sich der zweite Teil des Simulationsmodells, das neuronale Netz, effizienter und ressourcenschonender ermitteln.

Im Rahmen einer bevorzugten Ausbildung der Erfindung ist der erste Teil des Simulationsmodells als ein FMU-Modell ausgebildet. Dabei bezeichnet FMU eine sogenannte "functional mock-up unit". Die Ausbildung des ersten Teils des Simulationsmodells als FMU-Modell vereinfacht die Interaktion mit weiteren Simulationsmodellen bzw. Modellierungsdiensten.

Alternativ kann der erste Teil der Simulationsumgebung auch in einer Containerumgebung, insbesondere einem Docker-Container, implementiert werden. Solche Containerumgebungen stellen ebenfalls gebräuchliche Implementierungen für Simulationsmodellierungen dar und vereinfachen insbesondere die Interaktion mit weiteren Modellierungsdiensten.

Bevorzugt wird das neuronale Netz des zweiten Teils des Simulationsmodells derart trainiert, dass der computerimplementierte Modellierungsdienst eine Minimierung einer Quadratur einer Abweichung des simulierten Betrages der Ausgangsgrößen von einem Betrag der realen Ausgangsgrößen vornimmt. Diese Minimierung erfolgt in der Regel iterativ. Dies bedeutet, dass der computerimplementierte Modellierungsdienst die Parametrierung des neuronalen Netzes zunächst auf Basis des am realen technischen System ermittelten Antwortverhaltens des technischen Systems vorgibt und die Quadratur einer etwaigen Abweichung des mit dem neuronalen Netz und dem bekannten ersten Teil des Simulationsmodells simulierten Betrages der Ausgangsgrößen von einem Betrag der realen (zuvor gemessenen) Ausgangsgrößen ermittelt. Daraufhin führt der computerimplementierte Modellierungsdienst iterativ eine Minimierung dieser Abweichung durch, um das neuronale Netz besser zu trainieren.

Der computerimplementierte Modellierungsdienst kann dabei ein Gradientenverfahren durchführen, um die Minimierung der Quadratur der Abweichung des simulierten Betrages der Ausgangsgrößen von einem Betrag der realen Ausgangsgrößen vorzunehmen. Derartige Gradientenverfahren finden in der Regel schnell ein Minimum. Es kann sich dabei aber nur um ein lokales und nicht um das globale Minimum handeln, so dass bei bestimmten Bedingungen des technischen Systems auch ein ableitungsfreies Verfahren zur Anwendung kommen kann, um die Minimierung der Quadratur der Abweichung des simulierten Betrages der Ausgangsgrößen von einem Betrag der realen Ausgangsgrößen vorzunehmen.

Die Vorhersage der Ausgangsgrößen kann besonders vorteilhaft dazu verwendet werden, einen Wartungsbedarf des technischen Systems festzustellen, einen fehlerhaften Betrieb des technischen Systems festzustellen und gegebenenfalls entsprechende Maßnahmen zu triggern, , eine Werksabnahme / Factory Acceptance Test für das technische System durchzuführen und/oder einen Betrieb des technischen Systems und/oder einer technischen Anlage mit mehreren technischen Systemen zu überwachen.

Die zuvor formulierte Aufgabe wird zudem gelöst durch einen computerimplementierten Modellierungsdienst, der dazu ausgebildet ist, ein Verfahren wie zuvor erläutert durchzuführen.

Die zuvor formulierte Aufgabe wird zudem gelöst durch eine technische Anlage, insbesondere Prozess- oder Fertigungsanlage, mit wenigstens einem technischen System und einem computerimplementierten Modellierungsdienst.

Der computerimplementierte Modellierungsdienst kann bevorzugt auf einem Operator Station Server eines Leitsystems für die technische Anlage implementiert sein. Unter einem "Operator Station Server" wird dabei vorliegend ein Server verstanden, der zentral Daten eines Bedien- und Beobachtungssystems sowie in der Regel Alarm- und Messwertarchive des Leitsystems der technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der Prozessanlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der Prozessanlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Die zuvor beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: ein technisches System in einer Prinzipskizze;
- FIG 2: einen Aufbau eines Simulationsmodells für das technische System; und
- FIG 3: ein erfindungsgemäßes Verfahren in einer schematischen Darstellung.

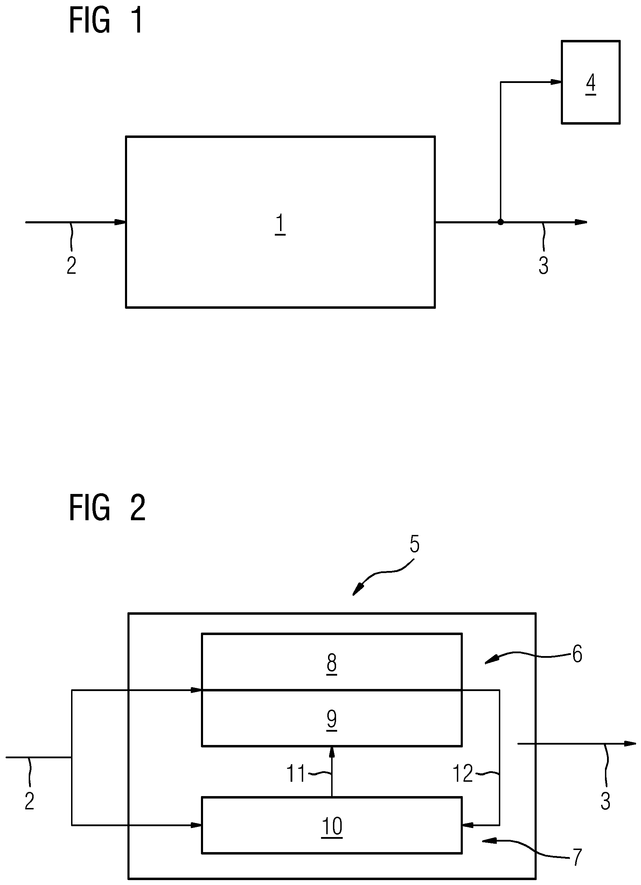

In FIG 1 ist ein reales technisches System 1 dargestellt. Das technische System 1 ist exemplarisch als ein Reaktor 1 ausgebildet. Der Reaktor 1 wirkt auf eine Temperatur und einen Druck von Eingangsgrößen 2 ein, die in den Reaktor geführt werden. Bei den Eingangsgrößen 2 kann es sich im vorliegenden Beispiel um einen Volumenstrom, eine Konzentration und eine Temperatur eines Fluides handeln. Das Beaufschlagen mit den Eingangsgrößen 2 kann durch ein Leitsystem mit einer entsprechenden Steuerungsfunktionalität erfolgen.

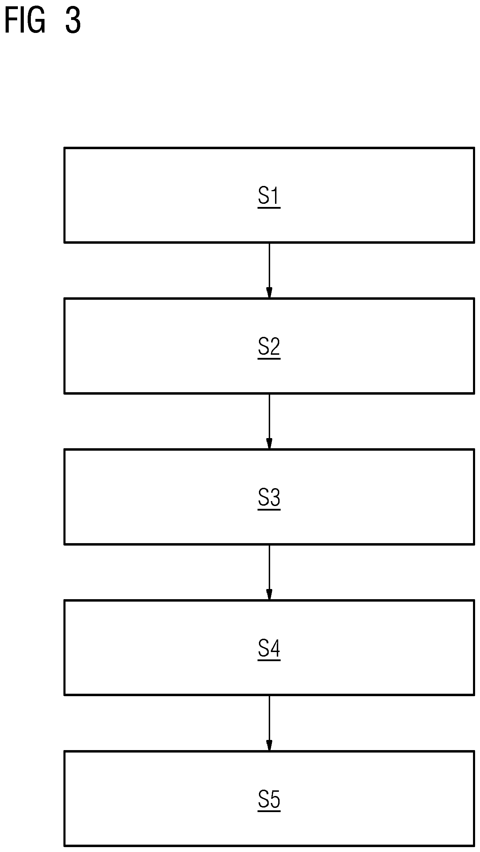

In einem ersten Schritt S1 (vgl. FIG 3) wird der Reaktor 1 mit den Eingangsgrößen 2 beaufschlagt. Der Reaktor 1 führt daraufhin als technisches Verhalten eine bestimmte Verfahrensoperation an den Eingangsgrößen 2 durch, mit denen der Reaktor 1 beaufschlagt wird. Das Ergebnis dieses technische Verhaltens des Reaktors 1 liegen Ausgangsgrößen 3 vor. Beim vorliegenden Beispiel kann das beispielweise eine bestimmte Fluidmischung einer bestimmten Temperatur, mit einer bestimmten Dichte und einem bestimmten Volumenstrom sein. Die Ausgangsgrößen 3 werden in einem zweiten Schritt S2 von einer Erfassungseinheit 4 messtechnisch erfasst, was mithilfe spezieller, an sich bekannter Sensoren erfolgen kann.

Darauffolgend wird durch einen computerimplementierten Modellierungsdienst ein Simulationsmodell 5 des technischen Systems (des Reaktors) erzeugt (vgl. FIG 2), um das technische Verhalten des technischen Systems 1 abzubilden. Hierzu erzeugt der Modellierungsdienst in einem dritten Schritt S3 einen ersten Teil 6 und einen zweiten Teil 7 des Simulationsmodells 5.

In dem als ein FMU-Modell ausgebildeten ersten Teil 6 wird ein bereits bekanntes Verhalten 8 des technischen Systems 1 implementiert. Beim Beispiel des Reaktors 1 sind die grundlegenden Dynamiken des Reaktors bekannt und werden in dem ersten, bereits bekannten Teil 6 implementiert. Zusätzlich berücksichtigt der Modellierungsdienst physikalische Randbedingungen 9 für die Erzeugung des ersten Teils 6 des Simulationsmodells 5. Beim Beispiel des Reaktors 1 stellt beispielsweise die Arrhenius-Gleichungen eine solche physikalische Randbedingung 9 dar. Der Modellierungsdienst erzeugt diesen ersten Teil 6, ohne, dass eine aufwändige Modellierung oder Programmierung durch einen Operator hierfür notwendig wäre.

In einem vierten Schritt S4 wird in dem zweiten, noch nicht bekannten Teil 7 des Simulationsmodells 5 ein neuronales Netz 10 implementiert. In einem darauffolgenden Schritt S5 wird das neuronale Netz 10 durch den Modellierungsdienst trainiert. Ziel des Trainings ist es, dass sich das Simulationsmodell 5 im Gesamten wie das reale technische System 1, beispielsweise der Reaktor 1, verhält. Das neuronale Netz 10 wurde im vorliegenden Beispiel so mit dem bekannten ersten Teil 6 des Simulationsmodells 5 verschaltet, dass das neuronale Netz 10 noch unbekannte Parameter 11 der physikalischen Randbedingungen 9, also der Arrhenius-Gleichungen 9, ermittelt und diese dem ersten Teil 6 des Simulationsmodells 5 zur Verfügung stellt. Als Eingangswerte dienen dem neuronalen Netz 10 die zuvor vorgegebenen Eingangsgrößen 2.

Der Modellierungsdienst wertet iterativ von dem ersten Teil 6 ermittelte Zwischenausgangsgrößen 12 (vgl. FIG 2) aus und vergleicht diese mit den eigentlich zu erwartenden Ausgangsgrößen 3. Daraufhin nimmt der computerimplementierte Modellierungsdienst eine Minimierung einer Quadratur einer Abweichung des simulierten Betrages der Ausgangsgrößen (also der Zwischenausgangsgrößen 12) von einem Betrag der realen Ausgangsgrößen 3 vor. Dabei führt der computerimplementierte Modellierungsdienst ein Gradientenverfahren durch, um die Minimierung der Quadratur der Abweichung des simulierten Betrages der Ausgangsgrößen 12 von einem Betrag der realen Ausgangsgrö-ßen 3 vorzunehmen. Das trainierte neuronale Netz 10 und der bekannte erste Teil 1 werden dann zu dem Gesamt-Simulationsmodell 5 zusammengefügt.

Im Anschluss wird das Simulationsmodell 5 computerimplementiert mit Eingangsgrößen 2 beaufschlagt, um simulativ die resultierenden Ausgangsgrößen 3 des technischen Systems 1, beispielsweise des Reaktors 1, vorherzusagen. Die Vorhersage der Ausgangsgrößen kann dann dazu verwendet werden, einen Wartungsbedarf des technischen Systems festzustellen, einen fehlerhaften Betrieb des technischen Systems festzustellen und gegebenenfalls entsprechende Maßnahmen zu triggern, eine Werksabnahme / Factory Acceptance Test für das technische System durchzuführen und/oder einen Betrieb des technischen Systems und/oder einer technischen Anlage mit mehreren technischen Systemen zu überwachen.

Obwohl die Erfindung im Detail durch die bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur computerbasierten Vorhersage von Ausgangsgrößen (3) eines mit Eingangsgrößen (2) beaufschlagten technischen Systems (1), umfassend:
- Beaufschlagen des technischen Systems (1) mit den Eingangsgrößen (2) und Aufnehmen der aus dem technischen Verhalten des technischen Systems (1) resultierenden Ausgangsgrößen (3) durch eine Erfassungseinheit (4),
- Erzeugen eines Simulationsmodells (5) des technischen Systems (1) durch einen computerimplementierten Modellierungsdienst, wobei das Simulationsmodell (5) ein technisches Verhalten des technischen Systems (1) auf die Anregung durch die Eingangsgrößen (2) hin abbildet, wobei das Simulationsmodell (5) aus einem ersten Teil (6) und einen zweiten Teil (7) gebildet wird,
- Implementieren eines bereits bekannten Teils (8) des technischen Verhaltens des technischen Systems (1) in dem ersten Teil (6) durch den computerimplementierten Modellierungsdienst,
- Implementieren eines neuronalen Netzes (10) in dem zweiten Teil (7) des Simulationsmodells (5) durch den computerimplementierten Modellierungsdienst,
- Trainieren des neuronalen Netzes (10) durch den computerimplementierten Modellierungsdienst, derart, dass das ausgeführte Simulationsmodell (5) bei einem simulativen Beaufschlagen mit den Eingangsgrößen (2) simulative Ausgangsgrößen (3) ausgibt, deren Betrag im Wesentlichen einem Betrag der zuvor aufgenommenen Ausgangsgrößen (3) des realen technischen Systems (1) entsprechen,
- Computerimplementiertes Beaufschlagen des Simulationsmodells mit Eingangsgrößen (2), um die Ausgangsgrößen (3) des technischen Systems (1) vorherzusagen.

2. Verfahren nach Anspruch 1, bei dem in dem ersten Teil des Simulationsmodells (5) physikalische Randbedingungen des technischen Systems (1) berücksichtigt werden.

3. Verfahren nach Anspruch 2, bei dem die physikalischen Randbedingungen (9) auf einem physikalischen Erhaltungssatz, insbesondere einer Massenerhaltung oder einer Energieerhaltung, beruhen.

4. Verfahren nach Anspruch 2, bei dem die physikalischen Randbedingungen (9) einen zu erwartenden Zusammenhang zwischen einer der Eingangsgrößen (2) und einer oder mehrerer der Ausgangsgrößen (3) darstellt.

5. Verfahren nach einem der vorangegangenen Ansprüche, bei dem der erste Teil des Simulationsmodells (5) als ein FMU-Modell ausgebildet wird.

6. Verfahren nach einem der Ansprüche 1 bis 4, bei dem der erste Teil des Simulationsmodells (5) in einer Containerumgebung, insbesondere einem Docker-Container, implementiert wird.

7. Verfahren nach einem der vorangegangenen Ansprüche, bei dem das neuronale Netz (10) des zweiten Teils (7) des Simulationsmodells (5) derart trainiert wird, dass der computerimplementierte Modellierungsdienst eine Minimierung einer Quadratur einer Abweichung des simulierten Betrages der Ausgangsgrößen (3) von einem Betrag der realen Ausgangsgrößen (3) vornimmt.

8. Verfahren nach Anspruch 7, bei dem der computerimplementierte Modellierungsdienst ein Gradientenverfahren durchführt, um die Minimierung der Quadratur der Abweichung des simulierten Betrages der Ausgangsgrößen (3) von einem Betrag der realen Ausgangsgrößen (3) vorzunehmen.

9. Verfahren nach Anspruch 7, bei der computerimplementierte Modellierungsdienst ein ableitungsfreies Verfahren durchführt, um die Minimierung der Quadratur der Abweichung des simulierten Betrages der Ausgangsgrößen (3) von einem Betrag der realen Ausgangsgrößen (3) vorzunehmen.

10. Verfahren nach einem der vorangegangenen Ansprüche, bei dem die Vorhersage der Ausgangsgrößen (3) dazu verwendet wird, einen Wartungsbedarf des technischen Systems (1) festzustellen.

11. Verfahren nach einem der vorangegangenen Ansprüche, bei dem die Vorhersage der Ausgangsgrößen (3) dazu verwendet wird, einen fehlerhaften Betrieb des technischen Systems (1) festzustellen und gegebenenfalls entsprechende Maßnahmen zu triggern.

12. Verfahren nach einem der vorangegangenen Ansprüche, bei dem die Vorhersage der Ausgangsgrößen (3) dazu verwendet wird, eine Werksabnahme / Factory Acceptance Test für das technische System (1) durchzuführen.

13. Verfahren nach einem der vorangegangenen Ansprüche, bei dem die Vorhersage der Ausgangsgrößen (3) dazu verwendet wird, einen Betrieb des technischen Systems (1) und/oder einer technischen Anlage mit mehreren technischen Systemen (1) zu überwachen.

14. Computerimplementierter Modellierungsdienst, der dazu ausgebildet ist, ein Verfahren nach einem der Ansprüche 1 bis 13 durchzuführen.

15. Technische Anlage, insbesondere Prozess- oder Fertigungsanlage, mit wenigstens einem technischen System (1) und einem computerimplementierten Modellierungsdienst nach Anspruch 14.
